(19) Europäisches Patentamt
European Patent Office
Office européen des brevets

(11) **EP 4 429 122 A1**

(12) **EUROPEAN PATENT APPLICATION**

(43) Date of publication:
**11.09.2024 Bulletin 2024/37**

(51) International Patent Classification (IPC):
**H04B 3/32** (2006.01)

(21) Application number: **24162138.2**

(52) Cooperative Patent Classification (CPC):
**H04B 3/32**

(22) Date of filing: **07.03.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.03.2023 US 202363450402 P**
**06.03.2024 US 202418596846**

(71) Applicant: **Marvell Asia Pte, Ltd.**
**Singapore 369522 (SG)**

(72) Inventors:
• **Xu, Junyi**
  **Fremont, CA, 94539 (US)**
• **Riani, Jamal**
  **5656 AE Eindhoven (NL)**
• **Wang, Zuoen**
  **Mountain View, CA, 94040 (US)**
• **Wu, Xing**
  **Palo Alto, CA, 94303 (US)**

(74) Representative: **Grünecker Patent- und Rechtsanwälte**
**PartG mbB**
**Leopoldstraße 4**
**80802 München (DE)**

(54) **NEAR-END CROSSTALK MITIGATION IN A SERDES DEVICE**

(57)    A communication apparatus includes a receiver disposed in proximity to a transmitter, and a crosstalk cancellation circuit. The receiver includes an input buffer, a front end, and an adaptive resampling circuit. The input buffer receives from the transmitter aggressor data, the aggressor data being timed by a transmitter clock clocking the transmitter. The front end receives data over a communication link, the data being serialized according to a receiver clock clocking the receiver, the receiver clock operating independently of the transmitter clock. The front end further generates a stream of data samples corresponding to the received data. The adaptive resampling circuit resamples the aggressor data, and generates resampled data timed by the receiver clock. The crosstalk cancellation circuit estimates, based on the resampled data, a crosstalk error signal related to the aggressor data, and subtracts the estimated crosstalk error signal from the stream of data samples.

FIG. 1

EP 4 429 122 A1

**Description**

**CROSS-REFERENCE TO RELATED APPLICATIONS**

This application claims the benefit of U.S. Provisional Patent Application 63/450,402, filed March 7, 2023, whose disclosure is incorporated herein by reference.

**FIELD OF THE DISCLOSURE**

The present disclosure relates generally to digital communications, and particularly to cancellation of interference in communication signals.

**BACKGROUND**

Signals received by a Serializer/Deserializer (SerDes) device are subject to various types of interference such as pair-to-pair crosstalk, e.g., far-end crosstalk (FEXT) and near-end crosstalk (NEXT), between different wire pairs that connect, e.g., to the same SerDes. NEXT may be caused by a transmitter of the same SerDes or of another neighbor SerDes. Canceling NEXT in a SerDes receiver is especially challenging when the clocks used by the interfering transmitter and victim receiver are asynchronous with one another.

The description above is presented as a general overview of related art in this field and should not be construed as an admission that any of the information it contains constitutes prior art against the present patent application.

**SUMMARY**

An embodiment that is described herein provides a communication apparatus that includes a receiver disposed in proximity to a transmitter, and a crosstalk cancellation circuit. The receiver includes an input buffer, a front end, and an adaptive resampling circuit. The input buffer is configured to receive from the transmitter aggressor data, the aggressor data being timed by a transmitter clock clocking the transmitter. The front end is configured to receive data over a communication link, the data being serialized according to a receiver clock clocking the receiver, the receiver clock operating independently of the transmitter clock. The front end is further configured to generate a stream of data samples corresponding to the received data. The adaptive resampling circuit is configured to resample the aggressor data, and to generate resampled data timed by the receiver clock. The crosstalk cancellation circuit is configured to estimate, based on the resampled data, a crosstalk error signal related to the aggressor data, and to subtract the estimated crosstalk error signal from the stream of data samples.

In some embodiments, both the transmitter and the receiver are disposed within a same Serializer/Deserializer (SerDes) device. In other embodiments, the transmitter and the receiver are disposed in different respective SerDes devices. In yet other embodiments, the adaptive resampling circuit is configured to resample the aggressor data according to an estimated time-varying phase shift between the transmitter clock and the receiver clock.

In an embodiment, the receiver includes a phase detector circuit, configured to estimate a frequency offset value from which the time-varying phase shift is derived, by generating a sequence of training symbols in synchronization with the transmitter clock, and sampling the training symbols in the sequence in synchronization with the receiver clock. In another embodiment, the phase detector circuit includes a Digital-to-Analog Converter (DAC), and the phase detector circuit is configured to generate the sequence of training symbols by generating a sequence of pseudorandom bits, and converting the pseudorandom bits in the sequence into corresponding analog training symbols using the DAC. In yet another embodiment, the phase detector circuit includes an Analog-to-Digital Converter (ADC), configured to sample the sequence of training symbols using a sampling clock that is synchronized with the receiver clock and shifted from the receiver clock by a sampling phase that is indicative of the time-varying phase shift between the transmitter clock and the receiver clock.

In some embodiments, a clock used for generating the sequence of training symbols is slower than the transmitter clock and synchronized with the transmitter clock, and the sampling clock used for sampling the ADC is slower than the receiver clock and synchronized with the receiver clock. In other embodiments, the crosstalk cancellation circuit includes a digital filter, which is configured to filter the resampled data to generate the crosstalk error signal. In yet other embodiments, the digital filter includes multiple sub-filters, and the digital filter is configured to (i) apply to the resampled data a Hadamard transform to produce multiple resampled data streams corresponding to respective rows of a Hadamard matrix representing the Hadamard transform, (ii) filter the resampled data streams using the respective sub-filters, and (iii) reconstruct the crosstalk error signal from the filtered resampled data streams.

In an embodiment, the crosstalk cancellation circuit is configured to decompose a finite impulse response (FIR) filter into the sub-filters, by transforming coefficients of the FIR filter to respective coefficients of the sub-filters using the Hadamard transform. In another embodiment, the Hadamard transform has a predefined order, and a number of the sub-filters is equal to or less than the order of the Hadamard transform. In yet another embodiment, the crosstalk cancellation circuit is configured to adapt the coefficients of the sub-filters so as to reduce a residual crosstalk component remaining after subtraction of the crosstalk error signal from the data samples.

There is additionally provided, in accordance with an embodiment that is described herein, a method for communication, including, in a receiver, which is disposed in proximity to a transmitter, receiving from the transmitter aggressor data, the aggressor data being timed by a transmitter clock clocking the transmitter. Data is received over a communication link, the data being serialized according to a receiver clock clocking the receiver, the receiver clock operating independently of the transmitter clock, and a stream of data samples corresponding to the received data is generated. The aggressor data is resampled according to an estimated time-varying phase shift between the transmitter clock and the receiver clock so as to generate resampled data timed by the receiver clock. Based on the resampled data, a crosstalk error signal related to the aggressor data is estimated, and the estimated crosstalk error signal is subtracted from the stream of data samples.

The present disclosure will be more fully understood from the following detailed description of the embodiments thereof, taken together with the drawings in which:

## BRIEF DESCRIPTION OF THE DRAWINGS

Fig. 1 is a block diagram that schematically illustrates a communication system, in accordance with an embodiment that is described herein;

Fig. 2 is a block diagram that schematically illustrates details of the crosstalk canceler operating in the SerDes device of Fig. 1, in accordance with an embodiment that is described herein;

Fig. 3 is a block diagram that schematically shows details of an input buffer and an adaptive resampling circuit, in accordance with an embodiment that is described herein;

Fig. 4 is a flow chart that schematically illustrates a method for resampling rate control, in accordance with an embodiment that is described herein;

Fig. 5 is a block diagram that schematically illustrates example structure of a phase detector circuit, in accordance with an embodiment that is described herein;

Fig. 6 is a block diagram that schematically illustrates details of a phase accumulator of the rate resampling circuit of Fig. 3, in accordance with an embodiment that is described herein;

Fig. 7 is a block diagram that schematically shows details of a Farrow filter, in accordance with an embodiment that is described herein;

Fig. 8 is a diagram that schematically illustrates a process of down-sampling, a Hadamard transform, up-sampling and reconstruction of coefficients of a digital filter, in accordance with an embodiment that is described herein; and

Fig. 9 is a diagram that schematically illustrates a filter that efficiently implements the NEXTC filter of Figs. 1 and 2, in accordance with an embodiment that is described herein.

## DETAILED DESCRIPTION OF EMBODIMENTS

Crosstalk interference, such as near-end crosstalk (NEXT) in a Serializer/Deserializer (SerDes) device, is typically difficult to filter out. One of the reasons for this difficulty is that the interference caused by the transmitter of a SerDes (or by the transmitter of another SerDes) is asynchronous with respect to the receiver in which the interference occurs (referred to herein as the "victim receiver"). Therefore, even when the transmitted interference signal is known, the resulting NEXT is asynchronous and cannot be filtered out of the signal in the victim receiver using a static digital filtering scheme. Another difficulty is to get real time phase difference information between the transmitter and receiver clocks.

Embodiments that are described herein address these problems by adaptive resampling of the transmitted interfering signal, and using short latency phase difference estimation required for the adaptive resampling. The disclosed resampling scheme, using a Farrow filter, for example, tracks the phase difference between the clocks of the transmitted interfering signal and the received signal in the victim receiver, and adjusts the resampling coefficients dynamically to compensate for changes in the phase difference. The resampled signal data is then filtered using a NEXT cancellation (NEXTC) filter, and subtracted out of the received signal data in the clock domain of the receiver. The NEXTC filter is further adapted to reduce residual crosstalk remaining after the subtraction of the crosstalk cancellation error signal. The NEXTC filter may be implemented efficiently by applying to the resampled data a Hadamard transform, filtering the resulting sub-sequences using respective sub-filters, and reconstructing the crosstalk cancellation error signal from the filtered data.

The disclosed embodiments thus provide a communication apparatus, including a receiver, which is disposed in proximity to a transmitter. The receiver includes an input buffer, a front end, an adaptive resampling circuit, and a crosstalk cancellation circuit. The input buffer receives from the transmitter aggressor data, the aggressor data being timed by a transmitter clock clocking the transmitter. The front end receives data over a communication link, the data being serialized according to a receiver clock clocking the receiver, the receiver clock operating independently of the transmitter clock, the front end further generates a stream of data samples corresponding to the received data. The adaptive resampling circuit resamples the aggressor data according to an estimated time-varying phase shift between the transmitter clock and the receiver clock so as to generate resampled data timed by the receiver clock. The crosstalk cancellation circuit estimates, based on the resampled data, a crosstalk error signal related to the aggressor data, and subtracts the estimated crosstalk error signal from the stream of data samples.

In an embodiment, both the transmitter and the receiver are disposed within the same SerDes device. In another embodiment, the transmitter and the receiver are disposed in different respective SerDes devices. In some embodiments, the receiver includes a phase detector circuit that estimates a frequency offset value from which the time-varying phase shift is derived, by generating a sequence of training symbols in synchronization with the transmitter clock, and sampling the training symbols in the sequence in synchronization with the receiver clock. The phase detector circuit includes a Digital-to-Analog Converter (DAC) and generates the sequence of training symbols by generating a sequence of pseudorandom bits and converting the pseudorandom bits in the sequence into corresponding analog training symbols using the DAC. The phase detector circuit also includes an Analog-to-Digital Converter (ADC), which samples the sequence of training symbols using a sampling clock that is synchronized with the receiver clock and shifted from the receiver clock by a sampling phase that is indicative of the time-varying phase shift between the transmitter clock and the receiver clock.

In some embodiments, for reducing implementation complexity, the clock used for generating the sequence of training symbols is slower than the transmitter clock and synchronized with the transmitter clock, and the sampling clock used for sampling the ADC is slower than the receiver clock and synchronized with the receiver clock.

In some embodiments, the crosstalk cancellation circuit includes a digital filter, which filters the resampled data to generate the crosstalk error signal. The digital filter includes multiple sub-filters, and (i) applies to the resampled data a Hadamard transform to produce multiple resampled data streams corresponding to respective rows of a Hadamard matrix representing the Hadamard transform, (ii) filters the resampled data streams using the respective sub-filters, and (iii) reconstructs the crosstalk error signal from the filtered resampled data streams.

In an embodiment, the crosstalk cancellation circuit generates the sub-filters by decomposing a finite impulse response (FIR) filter (the filter that outputs the crosstalk cancellation error signal) into the sub-filters, by transforming coefficients of the FIR filter to respective coefficients of the sub-filters using the Hadamard transform. In an embodiment, the Hadamard transform has a predefined order, and the number of the sub-filters is equal to or less than the order of the Hadamard transform. In some embodiments, the crosstalk cancellation circuit adapts the coefficients of the sub-filters so as to reduce a residual crosstalk component remaining after subtraction of the crosstalk error signal from the data samples.

In the disclosed techniques, a dedicated circuit generates phase-related information from which the phase shift between independent transmitter clock and receiver clock is derived. The dedicated circuit generates training symbols in the transmitter clock domain and samples the training symbols in the receiver clock domain, thus generating the phase-related information in real time with low latency, which is required for crosstalk cancellation in high speed SerDes devices. A filter that outputs a crosstalk cancellation error signal may be implemented efficiently by decomposing a FIR filter into multiple sub-filters using a Hadamard transform. One or more of the sub-filters may be omitted for reducing complexity, chip area, and power consumption.

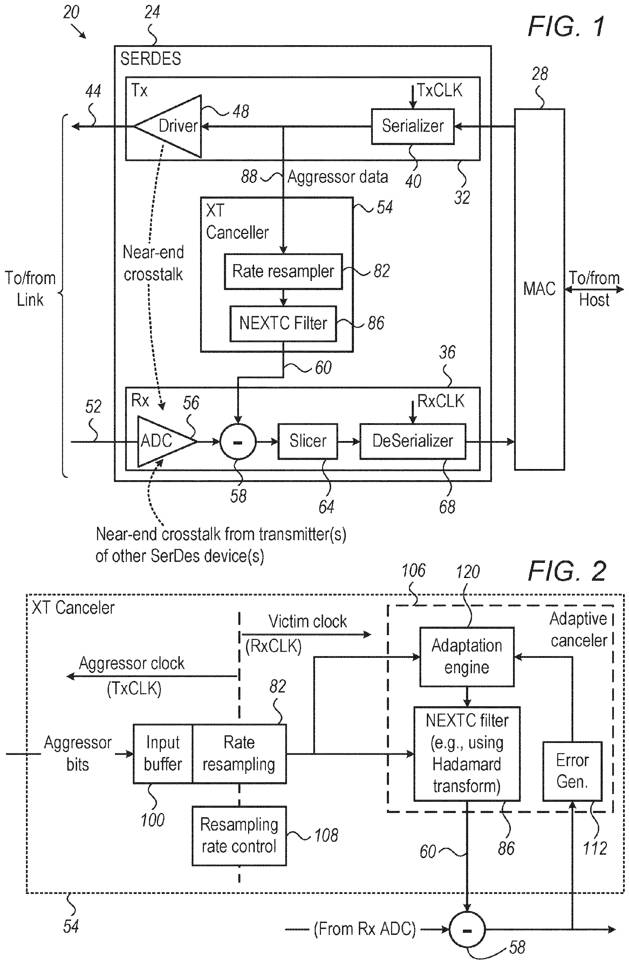

Fig. 1 is a block diagram that schematically illustrates a communication system 20, in accordance with an embodiment that is described herein.

Communication system 20 comprises a physical layer (PHY) interface in the form of a SerDes device 24, and a media access control (MAC) interface 28. The MAC interface comprises digital logic circuits, which perform link-layer functions, as are known in the art, and convey the received data to a host, such as a microprocessor or microcontroller.

In the example of Fig. 1, SerDes 24 comprises a transmitter (Tx) 32, and a receiver (Rx) 36. Transmitter 32 receives from the MAC interface groups of data values (e.g., groups of bits) originating from the host. The transmitter serializes each such group into a sequence of data values using a Serializer 40 and transmits the sequences of data values to a Tx link 44 via a driver 48 that converts the data values into data symbols. The operation of transmitter 32 (e.g., the serializing rate) is timed by a transmitter clock denoted TxCLK.

Receiver 36 comprises a front end circuit 56 that includes an analog/digital converter (ADC). In the description that follows, front end 56 is also referred to as ADC 56. The front end receives an incoming signal over communication link 52. The ADC generates a stream of data samples corresponding to the incoming signal. The sample stream and subsequent processing of the received signal are timed by the internal clock of receiver 36 denoted RxCLK. A crosstalk cancellation circuit (also referred to herein as a "XT cancellation circuit" or "XT canceler") 54 cancels crosstalk due to the signals transmitted by transmitter 32. An adder/subtracter 58 subtracts a crosstalk cancellation error signal 60 from the stream of data samples. (Alternatively, an inverse of the NEXT error could be generated and then added to the data stream to remove the NEXT component. References to a "subtracter" in the present description and in the claims include all possible implementations of such an adder/subtracter.) Computation of the NEXT error signal is described in detail hereinbelow.

Following subtraction of the NEXT error signal, a slicer 64 converts the samples output by the subtracter into a stream of digital data values . Following slicer 64, a Deserializer 68 desrializes the digital data values into data groups, and the resulting data groups are output via MAC interface 28 to the host.

Transmitter 32 and receiver 36 transmit and receive signals that are timed by respective clocks TxCLK and RxCLK, which are independent of one another. Consequently, receiver 36 is subject to asynchronous NEXT from transmitter 32 (and possibly from transmitters of other neighboring SedDes devices). This NEXT is mitigated using XT canceler 54, which generates the crosstalk cancellation error signal 60.

XT canceler 54 comprises a rate resampling circuit 82 and a NEXT cancellation (NEXTC) filter 86. The XT canceler receives aggressor data 88 from transmitter 32, the aggressor data contains data values serialized by Serializer 40 that are destined for transmission over link 44. The timing of the aggressor data is controlled in accordance with the TxCLK of the transmitter. Rate resampling circuit 82 resamples the aggressor data in accordance with the receiver clock (RxCLK) and NEXTC filter 86 filters the resampled data to produce crosstalk error cancellation signal 60.

In system 20, the receiver is generally disposed in proximity to the disturbing transmitter and is therefore subject to NEXT. In the example of Fig. 1, both the transmitter and the receiver are disposed within the same SerDes device. In alternative embodiments, however, the transmitter and receiver may be disposed in different respective SerDes devices that are in close proximity with one another.

Fig. 2 is a block diagram that schematically illustrates details of the XT canceler operating in the SerDes device of Fig. 1, in accordance with an embodiment that is described herein.

The diagram of Fig. 2 depicts a dotted line separating between an aggressor clock domain associated with TxCLK of transmitter 32, and a victim clock domain associated with RxCLK of receiver 36.

For the purposes of NEXT cancellation, XT canceler 54 receives samples of aggressor data 88 that were serialized by Serializer 40 of transmitter 32 and stores the samples in an input buffer 100. In the implementation that is described below, input buffer 100 comprises a pair of first-in first-out (FIFO) memories, although other buffering configurations may alternatively be used. Input buffer 100 is populated in accordance with clock TxCLK of transmitter 32, which is asynchronous with clock RxCLK of receiver 36.

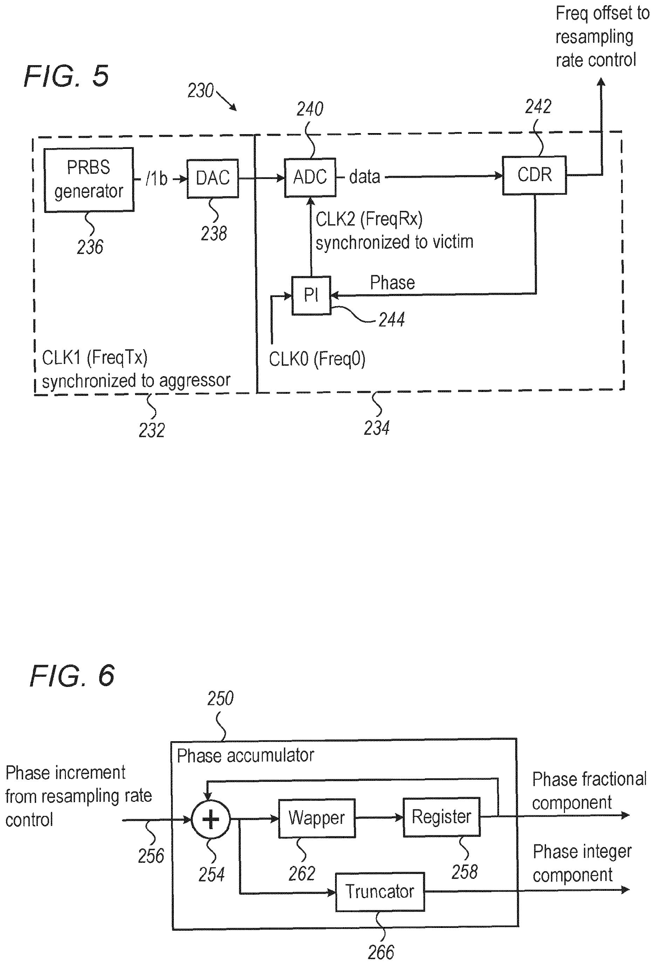

Rate resampling circuit 82 resamples the data in input buffer 100 to match the data to the clock of receiver 36. For this purpose, a resampling rate control circuit 108 extracts information of the relationship between the respective clocks of transmitter 32 and receiver 36, e.g., in the form of the frequency offset between the clocks. The frequency offset may be estimated using a phase detector circuit as will be described with reference to Fig. 5 below.

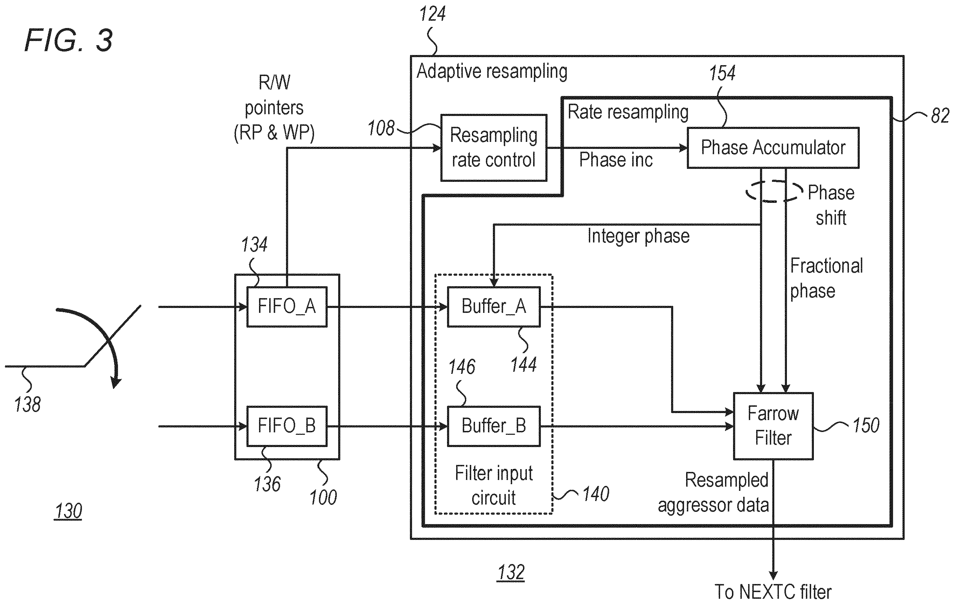

Based on the frequency offset, the resampling rate control circuit estimates a phase shift between the transmitter and receiver clocks. This phase shift typically varies over time since the clock rates and phases are independent. As will be described below, resampling rate control circuit 108 outputs a stream of phase increments, indicative of changes in the phase shift between the clocks, to a phase accumulator (154 in Fig. 3), which tracks the cumulative phase difference between the respective clocks of transmitter 32 and receiver 36 over time.

XT canceler 54 comprises an adaptive canceler 106, which further comprises NEXTC filter 86, an error generator 112 and an adaptive engine 120. The NEXTC filter receives the resampled data from rate resampling circuit 82 and filters the resampled data to produce crosstalk cancellation error signal 60. Subtracter 58 subtracts the crosstalk cancellation error from the received data symbols to remove the interference, as described above.

In the present example the NEXTC filter is an adaptive filter whose coefficients are adapted to reduce residual crosstalk remaining after the subtraction of the crosstalk cancellation error signal. To this end, error generator 112 generates an error signal indicative of the level of the residual crosstalk signal. Based on this error signal and on the resampled data, adaptation engine 120 adapts the coefficients of the NEXTC filter so as to minimize the level of the residual crosstalk signal.

Fig. 3 is a block diagram that schematically shows details of input buffer 100 and an adaptive resampling circuit 124, in accordance with an embodiment that is described herein. As illustrated in this figure, input buffer 100 operates in accordance with a clock domain 130, timed by the clock TxCLK of transmitter 32, while adaptive resampling circuit 124 operates in a clock domain 132, timed by the clock RxCLK of receiver 36. Because of the difference in clock rates, input buffer 100 is liable to overfill (and thus overflow) if the transmitter clock rate is greater than the receiver clock rate, or to underflow (and thus empty out) if the transmitter clock rate is less than the local clock rate.

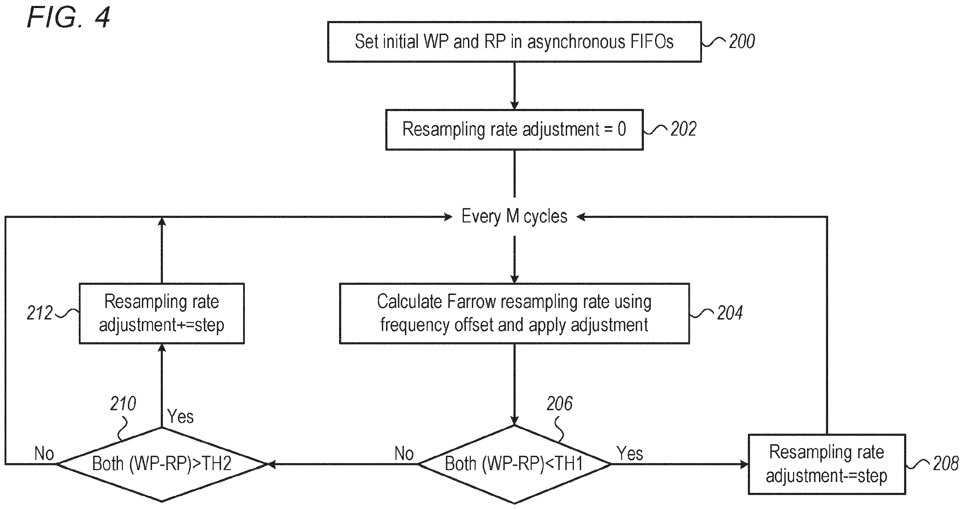

The mechanisms illustrated in Fig. 3 (and Fig. 4 below) adjust the rate of resampling by adaptive resampling circuit 124 so as to maintain the fill level of input buffer 100 within predefined bounds and thus prevent overflow and underflow.

Input buffer 100 comprises two FIFO memories 134 and 136. A buffer input circuit comprising a switch 138 inputs symbols of data (from ADC 56 of Rx 36) to memories 134 and 136 in alternation. By switching between two parallel memories, input buffer 100 can accommodate cases in which the transmitter clock is substantially faster than the receiver clock. The locations of the next samples to be written to FIFO memories 134 and 136 are indicated by respective write pointers WP, while the locations of the next samples to be read out to filter input circuit 140 are indicated by respective read pointers RP.

Filter input circuit 140 comprises two memories 144 and 146, which fetch and store data from FIFO memories 134 and 136, respectively. A resampling filter, a Farrow filter 150 in this example, reads data samples in alternation from memories 144 and 146. Alternatively, any other suitable type of a resampling filter can also be used. The Farrow filter calculates a polynomial approximation of the resampling coefficients. When memories 144 and 146 contain N samples, filter input circuit 140 will refrain from reading in new samples.

As mentioned above, resampling rate control circuit 108 outputs a stream of phase increments, indicative of changes in the phase shift between the transmitter and receiver clocks, to a phase accumulator 154, which tracks the cumulative phase difference between the clocks of transmitter 32 and receiver 36 over time. Phase accumulator 154 outputs a phase shift value that has an integer phase component and a fractional phase component, that control the resampling in the Farrow filter (by modifying the Farrow filter coefficients). The integer phase also controls filter input circuit 140. The Farrow filter outputs resampled aggressor data towards NEXTC filter 86.

Fig. 4 is a flow chart that schematically illustrates a method for resampling rate control, in accordance with an embodiment that is described herein.

The method will be described as executed by resampling rate control circuit 108.

As noted earlier, resampling rate control circuit 108 generates a phase increment value, which controls the resampling rate and coefficients of Farrow filter 150. For this purpose, resampling rate control circuit 108 receives or estimates the frequency offset between the transmitter and receiver clocks, and also checks the status of the read and write pointers RP and WP. As long as the separation between the read and write pointers remains within predefined bounds, the resampling rate of Farrow filter 150 remains unchanged. If the separation between the read and write pointers is outside these bounds, the resampling rate is adjusted gradually to bring the pointers closer together.

Upon startup of system 20, the read and write pointers RP and WP are set to predefined initial values, at a pointer initialization operation 200. The resampling rate adjustment is likewise set to an initial default value, at a rate initialization operation 202. During operation of adaptive resampling circuit 124, resampling rate control circuit 108 periodically recalculates the phase increment between the transmitter and receiver clocks, at a rate adjustment operation 204. In the example shown in Fig. 4, this recalculation takes place every M cycles. Phase accumulator 154 calculates the integer and fractional parts of the cumulative phase difference between the transmitter and receiver clocks, and filter input circuit 140 sets the read pointers RP in FIFO memories 134 and 136 to compensate for the integer phase difference.

For example, to calculate the phase increment at each pass i through operation 204, resampling rate control circuit 108 may use the frequency offset values F1 and F2 of the transmitter and receiver clock frequencies FreqTx and FreqRx (that are respectively synchronized to TxCLK and RxCLK) relative to a local oscillator frequency Freq0:

$$F1[i] = (FreqTx[i] - Freq0)/Freq0$$

$$F2[i] = (FreqRx[i] - Freq0)/Freq0$$

The offset values F1 and F2 are derived using a phase detector circuit, which will be described with reference to Fig. 5. In some embodiments, the FreqRx clock is slower than or equal to RxCLK, and the FreqTx clock is slower than or equal to TxCLK.

The resulting phase increment U[i] is then given by:

$$U[i] = \frac{1 + F1[i]}{1 + F2[i]} \approx (1 + F1[i])(1 - F2[i] + F2^2[i])$$

Phase accumulator 154 sums the value of U[i] over time to compute the cumulative phase shift, and outputs the integer and fractional parts as noted above.

After each new calculation and adjustment of the resampling rate at operation 204, resampling rate control circuit 108 checks the difference between the current locations of the read and write pointers WP and RP in both FIFO memories 134 and 136, at a pointer checking operation 206. If the difference is less than a minimum threshold (TH1), resampling rate control circuit 108 reduces the resampling rate by a small increment, at a rate reduction operation 208. Otherwise, resampling rate control circuit 108 checks whether the difference between the pointer locations is greater than a maximum threshold (TH2), at a threshold checking operation 210. If so, resampling rate control circuit 108 increases the resampling rate by a small increment, at a rate increase operation 212. This cycle continues throughout the operation of system 20.

Fig. 5 is a block diagram that schematically illustrates example structure of a phase detector circuit 230, in accordance with an embodiment that is described herein.

Phase detector circuit 230 comprises a data generator circuit 232 operating in accordance with a clock denoted CLK1 having a frequency FreqTx, and a sampling and lock circuit 234 operating in accordance with a clock denoted CLK2 having a frequency FreqRx. CLK1 is synchronized with the aggressor clock TxCLK of transmitter 32, whereas CLK2 is synchronized with the victim clock RxCLK of receiver 36. Moreover, CLK1 may be slower than TxCLK and CLK2 may be slower than RxCLK. Using slower clock frequency, in an embodiment, simplifies the implementation and lowers the cost of the phase detector circuit.

Data generator circuit 232 generates a sequence of training symbols. In the present example, the data generator circuit comprises a pseudo random bit sequence (PRBS) generator 236 that generates a sequence of pseudorandom bits, and a digital/analog converter (DAC) 238 that converts the pseudorandom bits in the sequence into the training symbols, at the rate of CLK1. In this embodiment, the resulting training symbols are also pseudorandom. In an alternative embodiment, the training symbols may be generated based on any other suitable source of randomness. Further alternatively, the data generator may generate the training symbols using a predefined sequence of symbols or bits.

Sampling and lock circuit 234 comprises an analog/digital converter (ADC) 240, a clock-data recovery (CDR) circuit 242, and a phase interpolator (PI) 244. ADC 240 samples the training symbols generated by data generator circuit 232 using CLK2 and provides the sampled data to the CDR. The CDR outputs an error signal (denoted "phase") indicative of the phase difference between CLK1 and CLK2. PI 244 adjusts the phase of the ADC sampling clock (CLK2) based on this error signal. The CDR additionally outputs a frequency offset value indicative of the frequency offsets F1 and F2 between FreqTx of CLK1 and Freq0, and between FreqRx of CLK2 and Freq0. Resampling rate control circuit 108 derives from the frequency offset value(s) a phase increment value U[i] as described above.

Fig. 6 is a block diagram that schematically illustrates details of phase accumulator 154 of rate resampling circuit 82 of Fig. 3, in accordance with an embodiment that is described herein.

Phase accumulator 154 comprises an adder 254 that sums between an input phase increment value 256 (received from resampling rate control circuit 108) and the current fractional phase value stored in a register 258, to produce a summed value. A wrapper 262 wraps the summed value, resulting in an updated fractional phase value stored in register 258. A truncator 266 truncates the summed value, for updating the integer phase value.

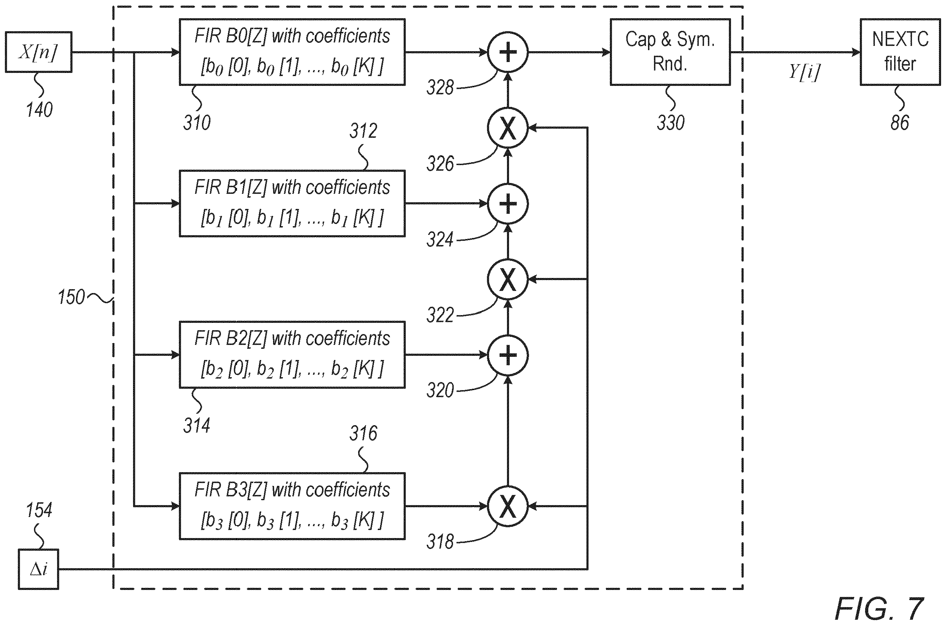

Fig. 7 is a block diagram that schematically shows details of Farrow filter 150, in accordance with an embodiment that is described herein. As noted above, the Farrow filter resamples aggressor data 88 at an adaptive, fractional resampling rate, using a polynomial approximation of the resampling coefficients. Adjustments to the resampling phase in Farrow filter 150 are implemented simply by changing the phase value in the filter, rather than reloading all the coefficient values. This approach enables Farrow filter 150 to carry out the resampling functions of adaptive resampling circuit 124 efficiently, using a finite impulse response (FIR) filter with a much smaller number of coefficients and input samples in each cycle than are required for conventional resampling schemes based on up-sampling, filtering, and down-sampling of the input data. Alternatively, adaptive resampling circuit 124 may implement other sorts of adaptive resampling algorithms, particularly algorithms that support fractional resampling.

Farrow filter 150 receives as its inputs a stream of input samples x[n] from filter input circuit 140 and the current fractional phase offset $\Delta_i$ between the transmitter and receiver clocks provided by phase accumulator 154. Farrow filter 150 in this example comprises four banks 310, 312, 314, 316 of filter coefficients, with K coefficients in each bank. Bank 310 contains zero-order coefficients B;;[z]; bank 312 contains first-order coefficients $B_1[z]$, which are multiplied by $\Delta_i$; bank 314 contains second-order coefficients $B_1[z]$, which are multiplied by $\Delta_i^2$; and bank 316 contains third-order coefficients $B_3[z]$, which are multiplied by $\Delta_i^3$. The coefficients in banks 310, 312, 314, 316 are multiplied and summed to give adjusted tap values $b_0(j) + b_1(j)\Delta_i + b_2(j)\Delta_i^2 + b_3(j)\Delta_i^3$, which are convolved with the input samples x[n]. The multiplication and summation of the coefficients are carried out by multipliers 318, 322, 326 and adders 320, 324 and 328. Alternatively, larger or smaller numbers of banks may be used, depending on the desired degree of precision.

The results of this filtering operation are regularized by a limit and rounding circuit 330, thus producing a stream of resampled data values y[i] . These values are input to digital filter NEXTC 86 to generate the crosstalk error signal, as explained above.

The NEXTC filter in Figs. 1 and 2 could be implemented as a FIR filter. With high speed SerDes devices, however, this FIR would have a large number of coefficients, which is costly and incurs long latencies. In some embodiments, the NEXTC filter is implemented efficiently using a Hadamard transform. To this end, the Hadamard transform is applied to both the input data and to the FIR coefficients as described below.

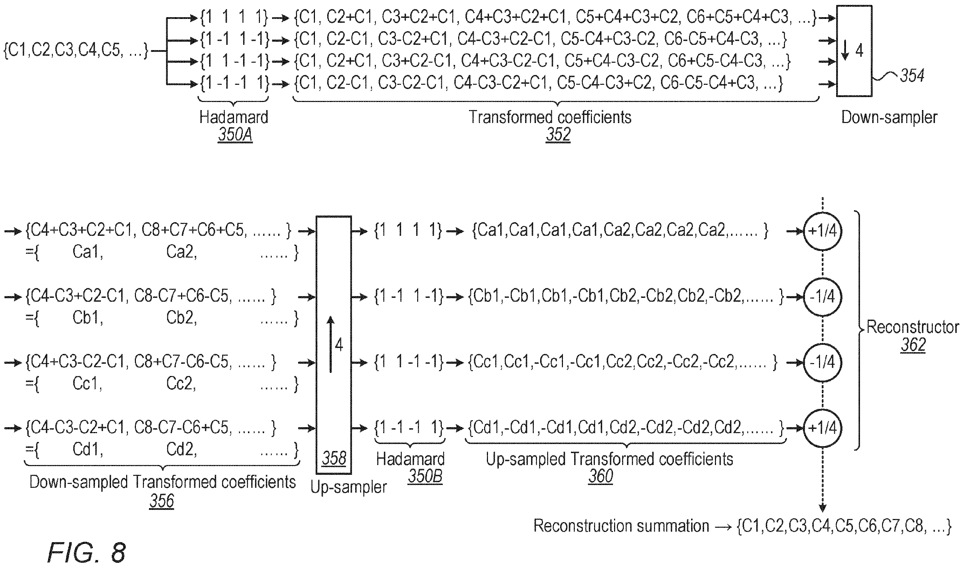

Fig. 8 is a diagram that schematically illustrates a process of down-sampling, a Hadamard transform, up-sampling and reconstruction of coefficients of a digital filter, in accordance with an embodiment that is described herein.

In the upper part of Fig. 8, the coefficients of a FIR filter (e.g., NEXTC filter 86) denoted {C1, C2, C3,...} are transformed using a Hadamard transform 350A. In this example the Hadamard transform has an order of four. This Hadamard transform can be represented by a 4-by-4 Hadamard matrix whose rows are given by: {1, 1, 1, 1}, {1, -1, 1, - 1}, {1, 1, -1, -1}, and {1, -1, -1, 1}. The transformed coefficients (352) of each row are down sampled by a factor of four using a down-sampler 354, resulting in down-sampled transformed coefficients 356 denoted {Ca1, Ca2, ...}, {Cb1, Cb2, ...}, {Cc1, Cc2, ...} and {Cd1, Cd2, ...}. The four groups of down-sampled transformed coefficients may serve as four separate sub-filters as will be described below.

To reconstruct the original coefficients, an up-sampler 358 up-samples coefficients 356 by a factor of four, and a Hadamard transform 350B is applied to produce up-sampled transformed coefficients 360. In this example Hadamard transforms 350A and 350B are represented by the same Hadamard matrix. A reconstructor 362 reconstructs the original FIR coefficients {C1, C2, C3, ...} by applying a weighted sum with weights having values of $\pm 1/4$ as shown in the figure.

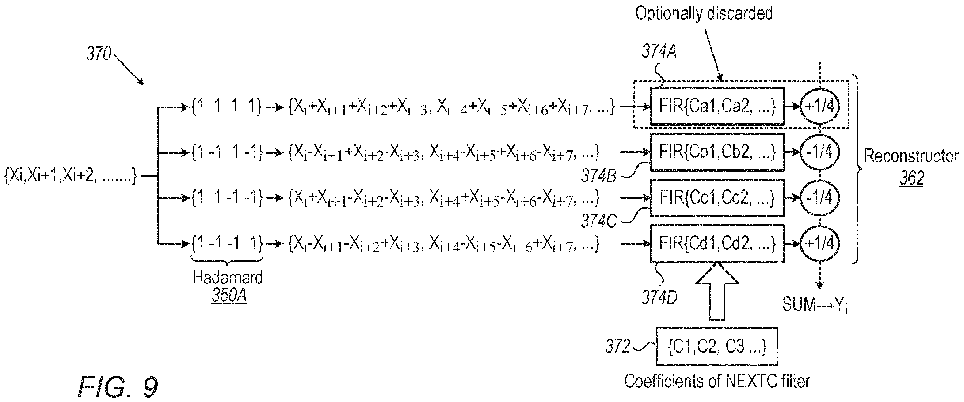

Fig. 9 is a diagram that schematically illustrates a filter 370 that efficiently implements the NEXTC filter of Figs. 1 and 2, in accordance with an embodiment that is described herein.

Filter 370 holds the coefficients 372 {C1, C2, C3, ...} of NEXTC filter 86. In the efficient architecture of filter 370, the coefficients of the NEXTC filter are decomposed into four sub-filters 374A, 374B, 374C and 374D, having respective transformed and down-sampled coefficients {Ca}, {Cb}, {Cc} and {Cd}, as described in Fig. 8 above. In the embodiment seen, the length of the sub-filters is four times shorter than the length of the NEXTC CIF filter. The bit width required for the coefficients of the sub-filters may be optimized to further reduce complexity and power consumption.

Filter 370 receives a sequence of input samples denoted {$X_i$, $X_{i+1}$, $X_{i+2}$, ...} and outputs corresponding filtered samples denoted $Y_i$. A Hadamard transform 350A (of order four) is applied to the input samples, resulting in four different sub-sequences, which are provided to the respective sub-filters. The samples of the sub-sequences are convolved with the coefficients of respective sub-filters to produce the filtered samples. Reconstructor 362 applies a weighted sum to the filtered samples for reconstructing $Y_i$.

It is noted that the output of filter 370 is equivalent to the output that would have resulted by filtering the input sequence using coefficients 372 directly. Since, the number of coefficients in the sub-filters is shorter than the number of coefficients 372, and since the sub-filters operate in parallel with one another, the latency introduced by filter 370 is considerably less than filtering using the NEXTC FIR coefficients 372.

In some embodiments the coefficients 370 of the NEXTC filter are updated over time, e.g., for reducing the level of a residual crosstalk signal as described above. In such embodiments, in response to updating the coefficients {C1, C2, C3, ...}, filter 370 updates the coefficients {Ca}, {Cb}, {Cc} and {Cd} of the sub-filters, accordingly.

Sub-filters 374A, 374B, 374C, 374D of filter 370 correspond to frequency bands having an increasing order. For example, sub-filter 347A corresponds to the lowest frequency band, and sub-filter 374D corresponds to the highest frequency band. In some embodiments, since the underlying crosstalk interference is dominant in high frequencies, the sub-filter 374A may be discarded, which reduces cost and complexity of filter 370 with only a little degradation in the crosstalk canceling performance.

The embodiments of Figs. 8 and 9 are given by way of example, and other suitable embodiments can also be used. For example, in Figs. 8 and 9 a Hadamard transform is used because this transform is specified by only +1 and -1 values, and therefore can be implemented efficiently. This, however, is not mandatory, and other types of suitable transforms such as the Wavelet transform can also be used.

In the example of Figs. 8 and 9 the Hadamard transform has an order of four, resulting in four dub-filters. Alternatively, a Hadamard transform of order lower or higher than four can also be used.

Although in the example of Fig 9 only one sub-filter is omitted, in alternative embodiments, two or more sub-filters may be omitted for reduced complexity, while still providing acceptable cancellation performance.

Although the embodiments described herein mainly address near-end crosstalk cancellation in SerDes devices, the methods and systems described herein can also be used in other applications, such as in other communication systems that are subjected to asynchronous crosstalk.

It is noted that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

The following is a list of further preferred embodiments of the invention:

Embodiment 1: Communication apparatus, comprising a receiver, which is disposed in proximity to a transmitter, the receiver comprising:

an input buffer configured to receive from the transmitter aggressor data, the aggressor data being timed by a transmitter clock clocking the transmitter;

a front end configured to receive data over a communication link, the data being serialized according to a receiver clock clocking the receiver, the receiver clock operating independently of the transmitter clock, the front end further configured to generate a stream of data samples corresponding to the received data; and

an adaptive resampling circuit configured to resample the aggressor data, and to generate resampled data timed by the receiver clock; and

a crosstalk cancellation circuit configured to estimate, based on the resampled data, a crosstalk error signal related to the aggressor data, and to subtract the estimated crosstalk error signal from the stream of data samples.

Embodiment 2: The communication apparatus according to embodiment 1, wherein both the transmitter and the receiver are disposed within a same Serializer/Deserializer (SerDes) device.

Embodiment 3: The communication apparatus according to embodiment 1, wherein the transmitter and the receiver are disposed in different respective SerDes devices.

Embodiment 4: The communication apparatus according to embodiment 1, wherein the adaptive resampling circuit is configured to resample the aggressor data according to an estimated time-varying phase shift between the transmitter clock and the receiver clock.

Embodiment 5: The communication apparatus according to embodiment 4, wherein the receiver comprises a phase detector circuit, configured to estimate a frequency offset value from which the time-varying phase shift is derived, by generating a sequence of training symbols in synchronization with the transmitter clock, and sampling the training symbols in the sequence in synchronization with the receiver clock.

Embodiment 6: The communication apparatus according to embodiment 5, wherein the phase detector circuit comprises a Digital-to-Analog Converter (DAC), and wherein the phase detector circuit is configured to generate the sequence of training symbols by generating a sequence of pseudorandom bits, and converting the pseudorandom bits in the sequence into corresponding analog training symbols using the DAC.

Embodiment 7: The communication apparatus according to embodiment 5, wherein the phase detector circuit comprises an Analog-to-Digital Converter (ADC), configured to sample the sequence of training symbols using a sampling clock that is synchronized with the receiver clock and shifted from the receiver clock by a sampling phase that is indicative of the time-varying phase shift between the transmitter clock and the receiver clock.

Embodiment 8: The communication apparatus according to embodiment 7, wherein a clock used for generating the sequence of training symbols is slower than the transmitter clock and synchronized with the transmitter clock, and the sampling clock used for sampling the ADC is slower than the receiver clock and synchronized with the receiver clock.

Embodiment 9: The communication apparatus according to embodiment 1, wherein the crosstalk cancellation circuit comprises a digital filter, which is configured to filter the resampled data to generate the crosstalk error signal.

Embodiment 10: The communication apparatus according to embodiment 9, wherein the digital filter comprises multiple sub-filters, and wherein the digital filter is configured to (i) apply to the resampled data a Hadamard transform to produce multiple resampled data streams corresponding to respective rows of a Hadamard matrix representing the Hadamard transform, (ii) filter the resampled data streams using the respective sub-filters, and (iii) reconstruct the crosstalk error signal from the filtered resampled data streams.

Embodiment 11: The communication apparatus according to embodiment 10, wherein the crosstalk cancellation circuit is configured to decompose a finite impulse response (FIR) filter into the sub-filters, by transforming coefficients of the FIR filter to respective coefficients of the sub-filters using the Hadamard transform.

Embodiment 12: The communication apparatus according to embodiment 10, wherein the Hadamard transform has a predefined order, and wherein a number of the sub-filters is equal to or less than the order of the Hadamard transform.

Embodiment 13: The communication apparatus according to embodiment 10, wherein the crosstalk cancellation circuit is configured to adapt the coefficients of the sub-filters so as to reduce a residual crosstalk component remaining after subtraction of the crosstalk error signal from the data samples.

Embodiment 14: A method for communication, comprising:

in a receiver, which is disposed in proximity to a transmitter, receiving from the transmitter aggressor data, the aggressor data being timed by a transmitter clock clocking the transmitter;

receiving data over a communication link, the data being serialized according to a receiver clock clocking the receiver, the receiver clock operating independently of the transmitter clock, and generating a stream of data samples corresponding to the received data;

resampling the aggressor data according to an estimated time-varying phase shift between the transmitter clock and the receiver clock so as to generate resampled data timed by the receiver clock; and

estimating, based on the resampled data, a crosstalk error signal related to the aggressor data, and subtracting the estimated crosstalk error signal from the stream of data samples.

Embodiment 15: The method according to embodiment 14, wherein both the transmitter and the receiver are disposed within a same Serializer/Deserializer (SerDes) device.

Embodiment 16: The method according to embodiment 14, wherein the transmitter and the receiver are disposed in different respective SerDes devices.

Embodiment 17: The method according to embodiment 14, wherein resampling the aggressor data comprises resampling the aggressor data according to an estimated time-varying phase shift between the transmitter clock and the receiver clock.

Embodiment 18: The method according to embodiment 17, and comprising estimating a frequency offset value from which the time-varying phase shift is derived, by generating a sequence of training symbols in synchronization with the transmitter clock, and sampling the training symbols in the sequence in synchronization with the receiver clock.

Embodiment 19: The method according to embodiment 18, wherein generating the sequence of training symbols comprises generating a sequence of pseudorandom bits, and converting the pseudorandom bits in the sequence into corresponding analog training symbols using a Digital-to-Analog Converter (DAC).

Embodiment 20: The method according to embodiment 18, wherein sampling the training symbols comprises sampling the sequence of training symbols by an Analog-to-Digital Converter (ADC) using a sampling clock that is synchronized with the receiver clock and shifted from the receiver clock by a sampling phase that is indicative of the time-varying phase shift between the transmitter clock and the receiver clock.

Embodiment 21: The method according to embodiment 20, wherein a clock used for generating the sequence of training symbols is slower than the transmitter clock and synchronized with the transmitter clock, and the sampling clock used for sampling the ADC is slower than the receiver clock and synchronized with the receiver clock.

Embodiment 22: The method according to embodiment 14, and comprising filtering the resampled data using a digital filter to generate the crosstalk error signal.

Embodiment 23: The method according to embodiment 22, wherein the digital filter comprises multiple sub-filters, and comprising, using the digital filter (i) applying to the resampled data a Hadamard transform to produce multiple resampled data streams corresponding to respective rows of a Hadamard matrix representing the Hadamard transform, (ii) filtering the resampled data streams using the respective sub-filters, and (iii) reconstructing the crosstalk error signal from the filtered resampled data streams.

Embodiment 24: The method according to embodiment 23, and comprising decomposing a finite impulse response (FIR) filter into the sub-filters, by transforming coefficients of the FIR filter to respective coefficients of the sub-filters using the Hadamard transform.

Embodiment 25: The method according to embodiment 23, wherein the Hadamard transform has a predefined order, and wherein a number of the sub-filters is equal to or less than the order of the Hadamard transform.

Embodiment 26: The method according to embodiment 23, and comprising adapting the coefficients of the sub-filters so as to reduce a residual crosstalk component remaining after subtraction of the crosstalk error signal from the data samples.

**Claims**

1. Communication apparatus, comprising a receiver, which is disposed in proximity to a transmitter, the receiver comprising:

   an input buffer configured to receive from the transmitter aggressor data, the aggressor data being timed by a transmitter clock clocking the transmitter;
   a front end configured to receive data over a communication link, the data being serialized according to a receiver clock clocking the receiver, the receiver clock operating independently of the transmitter clock, the front end further configured to generate a stream of data samples corresponding to the received data; and
   an adaptive resampling circuit configured to resample the aggressor data, and to generate resampled data timed by the receiver clock; and
   a crosstalk cancellation circuit configured to estimate, based on the resampled data, a crosstalk error signal related to the aggressor data, and to subtract the estimated crosstalk error signal from the stream of data samples.

2. The communication apparatus according to claim 1, wherein both the transmitter and the receiver are disposed within a same Serializer/Deserializer (SerDes) device.

3. The communication apparatus according to claim 1 or 2, wherein the transmitter and the receiver are disposed in different respective SerDes devices.

4. The communication apparatus according to one of claims 1 to 3, wherein the adaptive resampling circuit is configured to resample the aggressor data according to an estimated time-varying phase shift between the transmitter clock and the receiver clock; and/or
   wherein the receiver comprises a phase detector circuit, configured to estimate a frequency offset value from which the time-varying phase shift is derived, by generating a sequence of training symbols in synchronization with the transmitter clock, and sampling the training symbols in the sequence in synchronization with the receiver clock.

5. The communication apparatus according to claim 4, wherein the phase detector circuit comprises a Digital-to-Analog Converter (DAC), and wherein the phase detector circuit is configured to generate the sequence of training symbols by generating a sequence of pseudorandom bits, and converting the pseudorandom bits in the sequence into corresponding analog training symbols using the DAC.

6. The communication apparatus according to claim 4, wherein the phase detector circuit comprises an Analog-to-Digital Converter (ADC), configured to sample the sequence of training symbols using a sampling clock that is synchronized with the receiver clock and shifted from the receiver clock by a sampling phase that is indicative of the time-varying phase shift between the transmitter clock and the receiver clock; and/or
   wherein a clock used for generating the sequence of training symbols is slower than the transmitter clock and synchronized with the transmitter clock, and the sampling clock used for sampling the ADC is slower than the receiver clock and synchronized with the receiver clock.

7. The communication apparatus according to one of claims 1 to 6, wherein the crosstalk cancellation circuit comprises a digital filter, which is configured to filter the resampled data to generate the crosstalk error signal; and/or
   wherein the digital filter comprises multiple sub-filters, and wherein the digital filter is configured to (i) apply to the resampled data a Hadamard transform to produce multiple resampled data streams corresponding to respective rows of a Hadamard matrix representing the Hadamard transform, (ii) filter the resampled data streams using the respective sub-filters, and (iii) reconstruct the crosstalk error signal from the filtered resampled data streams.

8. The communication apparatus according to claim 7, wherein the crosstalk cancellation circuit is configured to decompose a finite impulse response (FIR) filter into the sub-filters, by transforming coefficients of the FIR filter to respective coefficients of the sub-filters using the Hadamard transform; or

   wherein the Hadamard transform has a predefined order, and wherein a number of the sub-filters is equal to or less than the order of the Hadamard transform; or
   wherein the crosstalk cancellation circuit is configured to adapt the coefficients of the sub-filters so as to reduce a residual crosstalk component remaining after subtraction of the crosstalk error signal from the data samples.

9. A method for communication, comprising:

   in a receiver, which is disposed in proximity to a transmitter, receiving from the transmitter aggressor data, the aggressor data being timed by a transmitter clock clocking the transmitter;
   receiving data over a communication link, the data being serialized according to a receiver clock clocking the receiver, the receiver clock operating independently of the transmitter clock, and generating a stream of data samples corresponding to the received data;
   resampling the aggressor data according to an estimated time-varying phase shift between the transmitter clock and the receiver clock so as to generate resampled data timed by the receiver clock; and
   estimating, based on the resampled data, a crosstalk error signal related to the aggressor data, and subtracting the estimated crosstalk error signal from the stream of data samples.

10. The method according to claim 9, wherein both the transmitter and the receiver are disposed within a same Serializer/Deserializer (SerDes) device; or
    wherein the transmitter and the receiver are disposed in different respective SerDes devices.

11. The method according to claim 9 or 10, wherein resampling the aggressor data comprises resampling the aggressor data according to an estimated time-varying phase shift between the transmitter clock and the receiver clock; and/or

    comprising estimating a frequency offset value from which the time-varying phase shift is derived, by generating a sequence of training symbols in synchronization with the transmitter clock, and sampling the training symbols in the sequence in synchronization with the receiver clock; and/or
    wherein generating the sequence of training symbols comprises generating a sequence of pseudorandom bits, and converting the pseudorandom bits in the sequence into corresponding analog training symbols using a Digital-to-Analog Converter (DAC).

12. The method according to claim 11, wherein sampling the training symbols comprises sampling the sequence of training symbols by an Analog-to-Digital Converter (ADC) using a sampling clock that is synchronized with the receiver clock and shifted from the receiver clock by a sampling phase that is indicative of the time-varying phase shift between the transmitter clock and the receiver clock.

13. The method according to claim 12, wherein a clock used for generating the sequence of training symbols is slower than the transmitter clock and synchronized with the transmitter clock, and the sampling clock used for sampling the ADC is slower than the receiver clock and synchronized with the receiver clock.

14. The method according to claims 9 to 13, and comprising filtering the resampled data using a digital filter to generate the crosstalk error signal; and/or
    wherein the digital filter comprises multiple sub-filters, and comprising, using the digital filter (i) applying to the resampled data a Hadamard transform to produce multiple resampled data streams corresponding to respective rows of a Hadamard matrix representing the Hadamard transform, (ii) filtering the resampled data streams using the respective sub-filters, and (iii) reconstructing the crosstalk error signal from the filtered resampled data streams.

15. The method according to claim 14, and comprising decomposing a finite impulse response (FIR) filter into the sub-filters, by transforming coefficients of the FIR filter to respective coefficients of the sub-filters using the Hadamard transform; or

    wherein the Hadamard transform has a predefined order, and wherein a number of the sub-filters is equal to or less than the order of the Hadamard transform; or

comprising adapting the coefficients of the sub-filters so as to reduce a residual crosstalk component remaining after subtraction of the crosstalk error signal from the data samples.

*FIG. 1*

*FIG. 2*

# FIG. 3

**124** Adaptive resampling

R/W pointers (RP & WP)

**108** Resampling rate control → Rate resampling **154** → Phase Accumulator

Phase inc

Phase shift

Integer phase

Fractional phase

**134** FIFO_A

**138**

**136** FIFO_B

**100**

**130**

**146** **144** Buffer_A

Buffer_B

Filter input circuit **140**

Farrow Filter **150**

Resampled aggressor data

**132**

To NEXTC filter

**82**

EP 4 429 122 A1

EP 4 429 122 A1

## FIG. 4

Set initial WP and RP in asynchronous FIFOs — 200

↓

Resampling rate adjustment = 0 — 202

↓

Every M cycles

↓

Calculate Farrow resampling rate using frequency offset and apply adjustment — 204

206 — Both (WP-RP)<TH1

Yes → Resampling rate adjustment-=step — 208

No →

210 — Both (WP-RP)>TH2

Yes → Resampling rate adjustment+=step — 212

No →

*FIG. 5*

Freq offset to
resampling
rate control

230

240

242

PRBS
generator    /1b → DAC → ADC ─ data → CDR

236          238

CLK2 (FreqRx)
synchronized to victim

PI    Phase

244

CLK1 (FreqTx)
synchronized to aggressor

CLK0 (Freq0)

232          234

*FIG. 6*

250

Phase accumulator

Phase increment
from resampling rate
control

256

254    Wapper    Register    Phase fractional
component

262    258

Truncator    Phase integer
component

266

FIG. 7

$\{C1,C2,C3,C4,C5, ...\}$

$\{1\ 1\ 1\ 1\} \rightarrow \{C1, C2+C1, C3+C2+C1, C4+C3+C2+C1, C5+C4+C3+C2, C6+C5+C4+C3, ...\} \rightarrow$

$\{1\ -1\ 1\ -1\} \rightarrow \{C1, C2-C1, C3-C2+C1, C4-C3+C2-C1, C5-C4+C3-C2, C6-C5+C4-C3, ...\}$

$\{1\ 1\ -1\ -1\} \rightarrow \{C1, C2+C1, C3+C2-C1, C4+C3-C2-C1, C5+C4-C3-C2, C6+C5-C4-C3, ...\}$

$\{1\ -1\ -1\ 1\} \rightarrow \{C1, C2-C1, C3-C2-C1, C4-C3-C2+C1, C5-C4-C3+C2, C6-C5-C4+C3, ...\}$

Hadamard
_350A_

Transformed coefficients
_352_

Down-sampler $\downarrow 4$  ~ _354_

$\rightarrow \{C4+C3+C2+C1, C8+C7+C6+C5, ...... \}$
$=\{\quad Ca1,\quad\quad Ca2,\quad\quad\quad ...... \}$

$\rightarrow \{C4-C3+C2-C1, C8-C7+C6-C5, ...... \}$
$=\{\quad Cb1,\quad\quad Cb2,\quad\quad\quad ...... \}$

$\rightarrow \{C4+C3-C2-C1, C8+C7-C6-C5, ...... \}$
$=\{\quad Cc1,\quad\quad Cc2,\quad\quad\quad ...... \}$

$\rightarrow \{C4-C3-C2+C1, C8-C7-C6+C5, ...... \}$
$=\{\quad Cd1,\quad\quad Cd2,\quad\quad\quad ...... \}$

Down-sampled Transformed coefficients
_356_

Up-sampler $\uparrow 4$ _358_

$\{1\ 1\ 1\ 1\} \rightarrow \{Ca1,Ca1,Ca1,Ca1,Ca2,Ca2,Ca2,Ca2,...... \} \rightarrow (+1/4)$

$\{1\ -1\ 1\ -1\} \rightarrow \{Cb1,-Cb1,Cb1,-Cb1,Cb2,-Cb2,Cb2,-Cb2,...... \} \rightarrow (-1/4)$

$\{1\ 1\ -1\ -1\} \rightarrow \{Cc1,Cc1,-Cc1,-Cc1,Cc2,Cc2,-Cc2,-Cc2,...... \} \rightarrow (-1/4)$

$\{1\ -1\ -1\ 1\} \rightarrow \{Cd1,-Cd1,-Cd1,Cd1,Cd2,-Cd2,-Cd2,Cd2,...... \} \rightarrow (+1/4)$

Hadamard
_350B_

Up-sampled Transformed coefficients
_360_

Reconstructor
_362_

Reconstruction summation $\rightarrow \{C1,C2,C3,C4,C5,C6,C7,C8, ...\}$

FIG. 8

EP 4 429 122 A1

$\{X_i, X_{i+1}, X_{i+2}, \ldots\ldots\}$

370

$\{1\ 1\ 1\ 1\}$ → $\{X_i+X_{i+1}+X_{i+2}+X_{i+3},\ X_{i+4}+X_{i+5}+X_{i+6}+X_{i+7},\ \ldots\}$

$\{1\ -1\ 1\ -1\}$ → $\{X_i-X_{i+1}+X_{i+2}-X_{i+3},\ X_{i+4}-X_{i+5}+X_{i+6}-X_{i+7},\ \ldots\}$

$\{1\ 1\ -1\ -1\}$ → $\{X_i+X_{i+1}-X_{i+2}-X_{i+3},\ X_{i+4}+X_{i+5}-X_{i+6}-X_{i+7},\ \ldots\}$

$\{1\ -1\ -1\ 1\}$ → $\{X_i-X_{i+1}-X_{i+2}+X_{i+3},\ X_{i+4}-X_{i+5}-X_{i+6}+X_{i+7},\ \ldots\}$

Hadamard
350A

FIR$\{Ca1,Ca2, \ldots\}$  374A
FIR$\{Cb1,Cb2, \ldots\}$  374B
FIR$\{Cc1,Cc2, \ldots\}$  374C
FIR$\{Cd1,Cd2, \ldots\}$  374D

Optionally discarded

+1/4
-1/4
-1/4
+1/4

Reconstructor
362

SUM→$Y_i$

372  $\{C1, C2, C3 \ldots\}$
Coefficients of NEXTC filter

FIG. 9

Europäisches Patentamt

European Patent Office

Office européen des brevets

**EUROPEAN SEARCH REPORT**

Application Number

EP 24 16 2138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/122503 A1 (AGAZZI OSCAR E [US]) 5 September 2002 (2002-09-05) * paragraphs [0018], [0019], [0024], [0025] * | 1-15 | INV. H04B3/32 |
| A | US 2007/237270 A1 (MEZER AMIR [IL] ET AL) 11 October 2007 (2007-10-11) * paragraphs [0003], [0026], [0027] * | 1-15 | |

TECHNICAL FIELDS SEARCHED (IPC)

H04B

The present search report has been drawn up for all claims

| Place of search | Date of completion of the search | Examiner |
|---|---|---|
| The Hague | 2 July 2024 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 429 122 A1**

## ANNEX TO THE EUROPEAN SEARCH REPORT
## ON EUROPEAN PATENT APPLICATION NO.

EP 24 16 2138

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2024

| Patent document cited in search report | Publication date | Patent family member(s) | Publication date |
|---|---|---|---|
| US 2002122503 A1 | 05-09-2002 | EP 1371200 A2 | 17-12-2003 |
| | | US 2002122503 A1 | 05-09-2002 |
| | | US 2008101510 A1 | 01-05-2008 |
| | | US 2012007756 A1 | 12-01-2012 |
| | | WO 02071713 A2 | 12-09-2002 |
| US 2007237270 A1 | 11-10-2007 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63450402